# EUROPEAN PATENT APPLICATION

(11) **EP 3 223 112 A1**
(43) Date of publication of application: **27.09.2017**
(21) Application number: 17158265.3
(22) Date of filing: 28.02.2017
(51) Int. Cl.: G06F 3/00, H04W 4/00

(54) **INFORMATION DISPLAY DEVICE, INFORMATION DISPLAY METHOD AND STORAGE MEDIUM**

(30) Priority: 24.03.2016 JP 2016060088
(71) Applicant: Casio Computer Co., Ltd., Tokyo 151-8543 (JP)
(72) Inventor: OZAWA, Makoto, Hamura-shi, Tokyo 205-8555 (JP); TANAKA, Toshiaki, Hamura-shi, Tokyo 205-8555 (JP)
(74) Representative: Grünecker Patent- und Rechtsanwälte PartG mbB

(57) **Abstract**

An information display device performs wireless communication with a communication device and includes a display and a processor. The wireless communication unit is configured to perform wireless communication with a communication device. The processor is configured to: input data in response to a user's operation; display output data corresponding to the input data, as output display data, on the display; in a state where the output display data is displayed, transmit the output data to the communication device; and after the output data has been transmitted to the communication device, delete the output display data from the display.

## Description

### Background of the Invention

### 1. Field of the Invention

The present invention relates to an information display device, an information display method, and a program for displaying input data such as texts, numerical values, and calculation expressions such that a different communication device can read the input data.

### 2. Description of the related art

A scientific calculator (an information display device) of the related art has a function of converting input data such as calculation expressions and numerical values, and calculation result data obtained by performing calculation on the input data, into one or more QR codes (registered as a trade mark) (conversion into QR codes) in response to an operation on a "QR" key and displaying the one or more QR codes. Further, a system for processing calculation data on a web has been put to practical use (see Non-Patent Literature 1 (ClassWiz Models>fx-991EX>fx-991EX retrieved on October 20, 2016 (URL "http://edu.casio.com/products/cwiz/fx991ex/")). In this system, a communication device with a camera, such as a tablet terminal can read a QR code displayed on the scientific calculator by imaging the QR code, and automatically transmit data (QR data) on the read QR code to a specific server provided on a web, and receive image data on a graph according to the QR data (input data and calculation result data) generated in the server, and display the graph.

However, it is cumbersome and complicated to read QR codes displayed on the information display device of the related art with the communication device with the camera by imaging the QR codes, since it is required to focus on each of the displayed QR codes and acquire an image whenever imaging is performed.

Also, there are some states and environments for imaging in which it is impossible to acquire good images of the QR codes. In these cases, it is impossible to successfully transmit the QR data to the server.

The present invention was made in view of the above-described problem, and an object of the present invention is to provide an information display device and the like making it possible to easily acquire data including input data with a different communication device.

### Summary of the Invention

An information display device according to the present invention performs wireless communication with a communication device and includes a display and a processor. The wireless communication unit is configured to perform wireless communication with a communication device. The processor is configured to: input data in response to a user's operation; display output data corresponding to the input data, as output display data, on the display; in a state where the output display data is displayed, transmit the output data to the communication device; and after the output data has been transmitted to the communication device, delete the output display data from the display.

### Brief Description of the Drawings

FIG. 1 is a view illustrating the configuration of the external appearance of an electronic dictionary device 10D according to an embodiment of an information display device of the present invention.
FIG. 2 is a schematic diagram illustrating a utilization form of a scientific calculator 10F according to an embodiment of the information display device of the present invention.
FIGS. 3A to 3C are views illustrating an example of a wireless communication means which is used between the information display device (10D or 10F) and a communication device 20.
FIG. 4 is a block diagram illustrating the electronic circuit configuration of the scientific calculator 10F which is the information display device.
FIG. 5 is a block diagram illustrating the electronic circuit configuration of the communication device 20.
FIG. 6 is a flow chart illustrating a part of a display control process of the information display device (10D or 10F).
FIG. 7 is a flow chart illustrating the other part of the display control process of the information display device (10D or 10F).
FIG. 8 is a view illustrating operation states of the electronic dictionary device 10D and operation states of the communication device 20 according to the display control process of the information display device (the electronic dictionary device 10D).
FIG. 9 is a view illustrating operation states of the scientific calculator 10F in a one-variable statistic calculation mode and operation states of the communication device 20 according to the display control process of the information display device (the scientific calculator 10F).
FIG. 10 is a view illustrating operation states of the scientific calculator 10F in a matrix calculation mode and operation states of the communication device 20 according to the display control process of the information display device (the scientific calculator 10F).

### Detailed Description of the Invention

Hereinafter, embodiments of the present invention will be described with reference to the accompanying drawings.

In the embodiments, cases where an information display device of the present invention is an electronic dictionary device 10D or a scientific calculator 10F will be described.

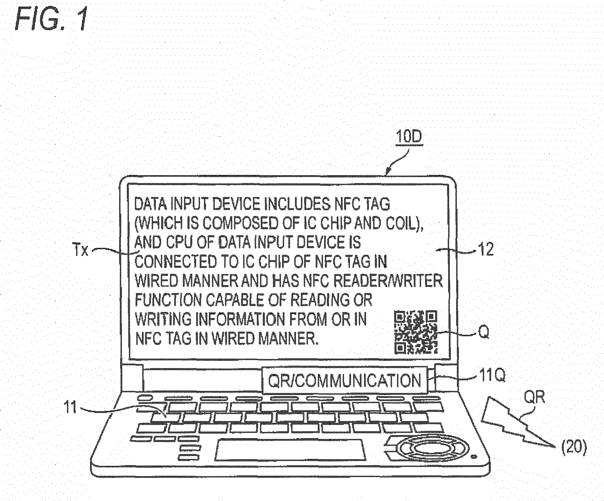

FIG. 1 is a view illustrating the configuration of the external appearance of the electronic dictionary device 10D according to an embodiment of the information display device of the present invention.

The electronic dictionary device 10D includes a key input unit 11 for inputting characters, numbers, symbols, and so on, and a display output unit 12 for displaying a text Tx input by user's operations on the key input unit 11 or a text Tx retrieved on the basis of a dictionary database built in the device.

Further, the electronic dictionary device 10D has a function of setting data including the displayed text Tx as output data, and converting the output data into a two-dimensional code Q such as a QR code (registered as a trade mark), and displaying the two-dimensional code on the display output unit 12, in response to an operation on a "QR/communication" key 11Q of the key input unit 11, and a function of transmitting data (QR data) on the two-dimensional code to the external communication device 20 connected to the electronic dictionary device by near field communication.

The communication device 20 is a tablet terminal with a camera or the like, and can acquire the data including the text Tx displayed on the electronic dictionary device 10D by acquiring an image of the two-dimensional code Q displayed on the electronic dictionary device 10D or receiving the QR data from the electronic dictionary device 10D by near field communication.

In a case where the "QR/communication" key 11Q is operated again, or in a case where the QR data is transmitted to the external communication device 20, the two-dimensional code Q displayed on the display output unit 12 is deleted, and the display output unit 12 returns to a state where it displays only the text Tx.

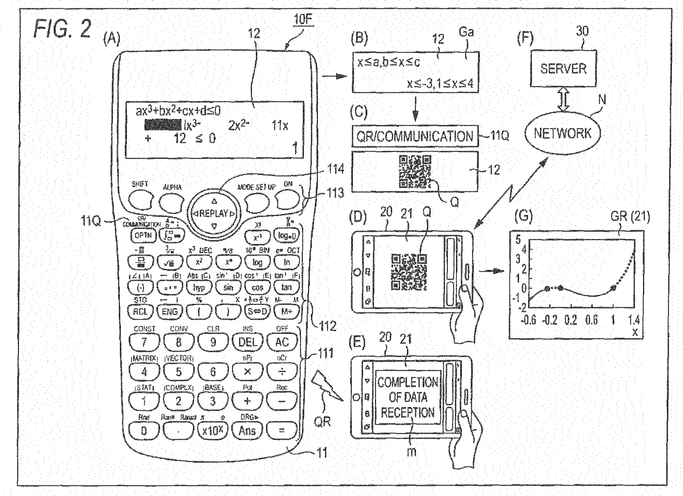

FIG. 2 is a schematic diagram illustrating a utilization form of the scientific calculator 10F according to an embodiment of the information display device of the present invention.

Now, a system including the scientific calculator 10F which is the information display device, the communication device 20 such as a tablet terminal with a camera, and a compute server 30 provided on a communication network N as shown in FIG. 2 will be described as an example.

The scientific calculator 10F is configured in a small size due to the necessity of portability such that a user can sufficiently grip it with one hand and operate it with one hand. On the front surface of the main body of the scientific calculator 10F, the key input unit 11 and the display output unit 12 are provided.

The key input unit 11 includes a numerical-value/operation-symbol key group 111 for inputting numerical values or mathematical expressions, or issuing a calculation performance instruction, an arithmetic-function/function key group 112 for inputting various arithmetic functions or starting a memory function, a mode setting key group 113 for displaying a menu screen of various operating modes or issuing an operating-mode setting instruction, and a cursor key 114 for performing various operations such as an operation to move a cursor displayed on the display output unit 12 and an operation to select a data item.

As the number/operation-symbol key group 111, "0" to "9" (numeric) keys, "+", "-", "×", and "÷" (four basic operation symbols) keys, "Ans" and "=" (execution) keys, "AC" (clear) key, and so on are arranged.

As the arithmetic-function/function key group 112, an "x⁻¹" (x to the negative one power; the reciprocal of x) key, a "√□" (root) key, a "□/□" (fraction) key, a "sin" (sine) key, an "M+" (memory plus) key, an "OPTN" (option) key, a "RCL" (memory call) key, and so on are arranged.

As the mode setting key group 113, a "MODE" (mode) key, a "SHIFT" (shift) key, an "ALPHA" (alphabet) key, an "ON" (power-on) key, and so on are arranged.

Also, each key of the number/operation-symbol key group 111 and the arithmetic-function/function key group 112 is configured so as to be able to act as a key for a function written above the corresponding key, not a function written on the corresponding key, if the corresponding key is operated after the "SHIFT" key is operated. For example, an operation on the "AC" key after an operation on the "SHIFT" key (hereinafter referred to as a "SHIFT"+"AC" key or the like.) acts as an "OFF" (power-off) key. A "SHIFT"+"OPTN" key acts as the "QR/communication" key 11Q, and a "SHIFT"+"RCL" key acts as a "STO" (memory registration) key.

The display output unit 12 is composed of a dot matrix type liquid crystal display unit.

The scientific calculator 10F has a function of setting data including at least one data item of data on numerical values and a calculation expression input by user's operations on the key input unit 11 and calculation result data according to the calculation expression, as output data, and converting the output data into a two-dimensional code Q such as a QR code (registered as a trade mark), and displaying the two-dimensional code on the display output unit 12, in response to an operation on the "QR/communication" key 11Q, and a function of transmitting data (QR data) on the two-dimensional code Q to the communication device 20 connected to the scientific calculator by near field communication.

If the "QR/communication" key 11Q is operated again, or in a case where the QR data is transmitted to the communication device 20, the two-dimensional code Q displayed on the display output unit 12 is deleted, whereby the display output unit 12 returns to a display state where it does not display the two-dimensional code Q.

The communication device 20 has a function of acquiring the data (QR data) on the two-dimensional code Q displayed by the scientific calculator 10F by acquiring an image of the two-dimensional code Q or receiving the corresponding data from the scientific calculator 10F by near field communication, and a function of transmitting the data (QR data) on the two-dimensional code Q to the compute server 30, and receiving calculation reference information such as a graph, a table, or a calculation result generated on the basis of the QR data by the compute server 30, and displaying the calculation reference information.

Also, the two-dimensional code Q which is displayed by the scientific calculator 10F includes setting data of the scientific calculator 10F, such as a unique ID, a calculation unit, a calculation angle, and a display format. Also, the two-dimensional code Q may further include a communication address of the compute server 30. In this case, the communication device 20 automatically accesses the compute server 30 on the basis of the communication address of the compute server 30 included in the data (QR data) on the two-dimensional code Q acquired from the scientific calculator 10F by acquiring an image or directly.

The communication device 20 is not limited to a tablet terminal with a camera, and may be configured as a personal digital assistant (PDA), a smart phone, a note personal computer (PC), or a game console.

If a user designates an inequality calculation mode by operating the key input unit 11, and inputs an inequality "ax³ + bx² + cx + d ≤ 0" and numerical values of variables of the inequality, and performs a calculation performance operation (on a "=" key) as shown in (A) of FIG. 2, "x ≤ a, b ≤ x ≤ c" and "x ≤ -3. 1 ≤ x ≤ 4" are displayed as a calculation result Ga as shown in (B) of FIG. 2.

In this state, if the "QR/communication" key 11Q is operated as shown in (C) of FIG. 2, data including the inequality, the numerical values of the variables, the calculation result, the unique ID, and the communication address of the compute server 30 is designated as output data, and is converted into a two-dimensional code Q, and the two-dimensional code is displayed on the display output unit 12.

If the communication device 20 acquires an image of the two-dimensional code Q displayed on the scientific calculator 10F as shown in (D) of FIG. 2, or receives QR data on the two-dimensional code from the scientific calculator 10F as shown in (E) of FIG. 2, the communication device is connected to the compute server 30 on the basis of the communication address included in the received QR data as shown in (F) of FIG. 2, and transmits the QR data (including the inequality, the numerical values of the variables, and the calculation result) to the compute server.

In this case, in the scientific calculator 10F, if the "QR/communication" key 11Q is operated again, or transmission of the QR data to the communication device 20 is completed, the two-dimensional code Q displayed on the display output unit 12 is deleted, whereby the display output unit 12 returns to the state where it displays the calculation result Ga (see (B) of FIG. 2).

Also, in the communication device 20, if reception of the QR data is completed, a reception completion message m (see (E) of FIG. 2) is displayed on a display output unit 21.

The compute server 30 generates a graph screen GS corresponding to the calculation result of the inequality, as the calculation reference information, as shown in (G) of FIG. 2, on the basis of the QR data (including the inequality, the numerical values of the variables, and the calculation result) received from the communication device 20, and transmits the calculation reference information to the communication device 20 which is the transmission source of the QR data.

The communication device 20 receives the graph screen GS corresponding to the QR data (including the inequality, the numerical values of the variables, and the calculation result) as the calculation reference information from the compute server 30, and displays the calculation reference information on the display output unit 21.

As described above, in the state where the two-dimensional code Q is displayed on the scientific calculator 10F, if the communication device 20 is brought close to the scientific calculator 10F such that a communication connection is established by near field communication, the communication device 20 can easily and accurately acquire the data (the QR data) on the two-dimensional code Q, without acquiring an image of the two-dimensional code. Also, the communication device can easily acquire the graph screen GS or the like corresponding to the QR data (such as the numerical values, the calculation expression, and the calculation result), as the calculation reference information, from the compute server 30, and display the calculation reference information.

Now, a wireless communication means for establishing a communication connection between the electronic dictionary device 10D or the scientific calculator 10F which is the information display device and the communication device 20 will be described.

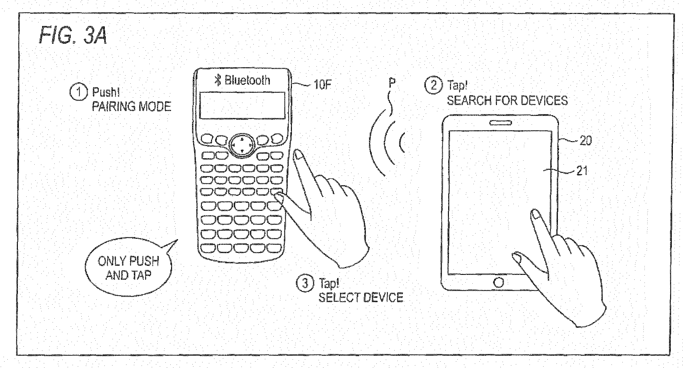

FIGS. 3A to 3C are views illustrating an example of the wireless communication means which is used between the information display device (10D or 10F) and the communication device 20.

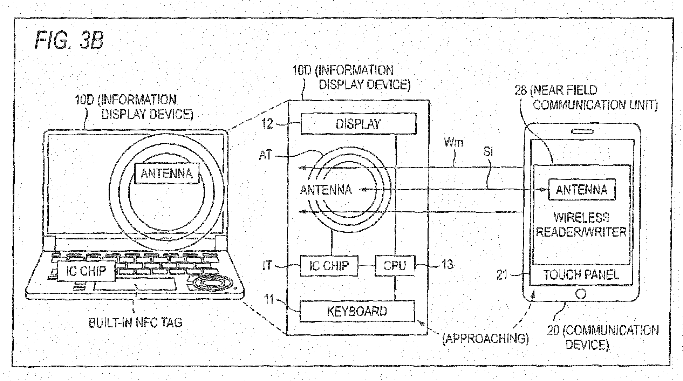

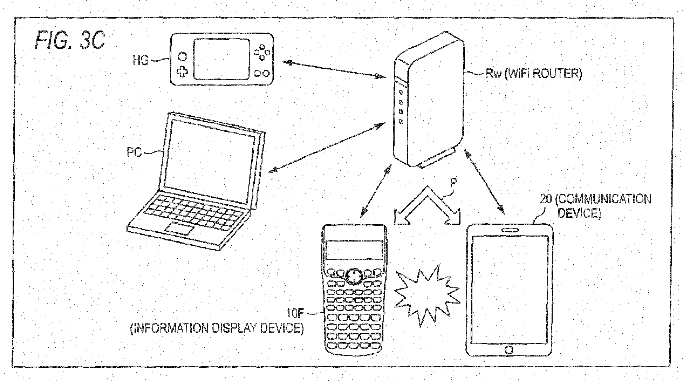

As the wireless communication means, any one of near field communication such as Bluetooth (registered as a trade mark) as shown in FIG. 3A, near field communication such as NFC as shown in FIG. 3B, near field communication using a wireless LAN such as WiFi as shown in FIG. 3C, and other types of near field communication may be used.

In a case of using near field communication such as Bluetooth as shown in FIG. 3A, if a predetermined key (button) of the information display device (10F) is pushed, interrogation is performed on the communication device 20 existing around the information display device. Then, the communication device displays a list of partner devices capable of communication and including the information display device (10F). If the information display device (10F) is designated (tapped) from the displayed partner device list, the information display device (10F) and the communication device 20 are paired such that a communication connection P is established between them.

Also, near field communication such as NFC shown in FIG. 3B is a wireless communication means for performing wireless communication by an induced current caused by a magnetic field from the communication device 20.

For example, an NFC tag built in the information display device (the electronic dictionary device 10D) includes a coil antenna AT in which an induced current flows in response to a magnetic field Wm which is generated from a near field communication unit (a wireless reader/writer) 28 of the communication device 20, and an IC chip IT which uses the induced current flowing in the coil antenna AT as electromotive force to operate. A CPU 13 of the information display device (the electronic dictionary device 10D) is connected to the IC chip IT of the NFC tag in a wired manner, and has a wired reader/writer function capable of directly reading and writing data from and in the IC chip IT. In this case, between the NFC tag of the information display device (the electronic dictionary device 10D) and the near field communication unit (the wireless reader/writer) 28 of the communication device 20, wireless communication Si is performed.

Also, in a case of using near field communication using a wireless LAN such as WiFi shown in FIG. 3C, for example, only preset partner communication devices of individual communication devices (such as the information display device 10F, the communication device 20, a personal computer PC, and a game console HG) connected to the wireless LAN by a WiFi router Rw are paired such that a communication connection P is established between them. In this case, if the partner communication devices detect an impact such as a light touch with each other, the partner communication devices are paired such that a communication connection P is established between them.

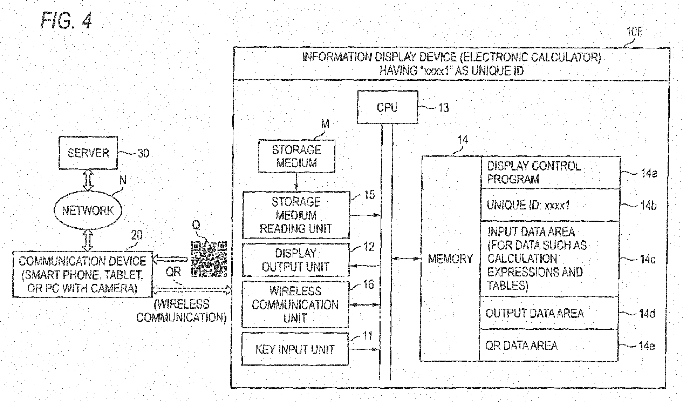

FIG. 4 is a block diagram illustrating the electronic circuit configuration of the scientific calculator 10F which is the information display device.

However, since some parts of an electronic circuit of the electronic dictionary device 10D which is the information display device related to the present embodiment is substantially the same as those of an electronic circuit of the scientific calculator 10F, they will not be described.

The electronic circuit of the scientific calculator 10F includes the CPU 13 which is a computer, a memory 14, a storage medium reading unit 15, and a wireless communication unit 16, in addition to the key input unit 11 and the display output unit 12.

The CPU 13 controls operations of the individual units of the circuit according to a display control program 14a stored in the memory 14, thereby performing various calculation processes based on key input signals from the key input unit 11. The display control program 14a may be stored in the memory 14 in advance, or may be a program read from an external storage medium M such as a memory card through the storage medium reading unit 13 and stored in the memory 14. Even if the user operates the key input unit 11, the display control program 14a is not rewritten.

In the memory 14, a unique ID 14b is also stored as information which the user cannot rewrite. The unique ID 14b is an ID unique to each scientific calculator 10F.

The memory 14 has an input data area 14c, an output data area 14d, and a QR data area 14e for storing data which the user cannot rewrite, other than the above-described information which the user cannot rewrite.

If key code data are sequentially input by the key input unit 11, whereby data on a calculation expression or a table which can be created by the key code data is stored in the input data area 14c. For example, numeric keys are stored as codes representing numbers, and function keys such as a "sin" key are stored as codes representing corresponding functions, and operation symbol keys such as the "+", "-", "×", and "÷" keys are stored as codes representing corresponding operation symbols. Also, in the input data area 14c, variables such as different numerical values which can be individually registered for nine characters A, B, C, D, E, F, M, X, and Y are also stored. For example, if a "3" key, the "SHIFT"+"RCL" key (the "STO" key), and a "(-)" key (an "A" key) are operated, a numerical value "3" is registered as the variable "A". Also, calculation types, such as a basic calculation mode, statistic calculation modes (such as a one-variable statistic calculation mode and a two-variable statistic calculation mode), and a matrix calculation mode, set by operating a "MODE" key of the key input unit 11, and other data necessary for individual calculations, such as table data for statistic calculations, are stored. In a case whether the number of variables is 1, a table data item includes a numerical value data item corresponding to a variable "X"; whereas, in a case where the number of variables is two, a table data item includes numerical value data items corresponding to variables "X" and "Y", respectively.

In the output data area 14d, data including at least one data item of data on numerical values and a calculation expression input by user's operations on the key input unit 11, and calculation result data according to the calculation expression is stored and held as output data for the communication device 20, in response to an operation on the "QR/communication" key 11Q.

In the QR data area 14e, data (QR data) obtained by converting the output data stored in the output data area 14d into a two-dimensional code Q is stored and held. However, in a case where the output data has such a data size that it cannot be converted into one two-dimensional code Q, the output data is converted into a plurality of partial two-dimensional codes Q1 to QN, and partial QR data items 1 to N on partial two-dimensional codes are stored and held (wherein N is the number of partial output data items).

The wireless communication unit 16 has a function of performing wireless communication such as Bluetooth, NFC, or WiFi with the communication device 20 as described above with reference to FIGS. 3A to 3C.

In the scientific calculator 10 configured as described above, the CPU 13 controls the operations of the individual units of the circuit according to commands described in the display control program 14a, whereby software and hardware operate in cooperation, thereby implementing a display control function of converting output data including input data input from the key input unit 11 into a two-dimensional code (in the present embodiment, a QR code), and displaying the at least one two-dimensional code by the display output unit 12, and wirelessly transmitting data (QR data) on the at least two-dimensional code Q to the communication device 20.

If the two-dimensional code Q is displayed on the display output unit 12 of the scientific calculator 10F, the communication device 20 acquires an image of the two-dimensional code Q, or establishes a communication connection with the wireless communication unit 16 of the scientific calculator 10F by near field communication, and receives the QR data from the scientific calculator 10F, thereby acquiring the input data of the scientific calculator 10F, and transmits the input data to the compute server 30 through the communication network N.

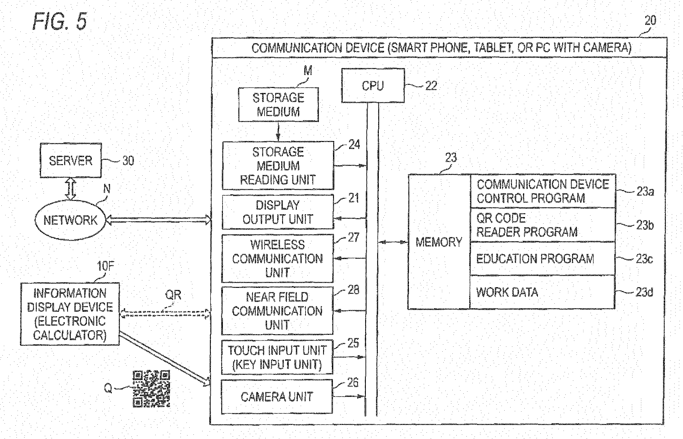

FIG. 5 is a block diagram illustrating the electronic circuit configuration of the communication device 20.

An electronic circuit of the communication device 20 includes a CPU 22 which is a computer, a memory 23, a storage medium reading unit 24, a touch input unit 25 integrally provided on the display output unit 21, a camera unit 26, and a wireless communication unit 27, in addition to the display output unit 21 and the near field communication unit 28. Also, the touch input unit 25 may include a key input unit such as a power key.

The CPU 22 controls operations of the individual units of the circuit, using a work data area 23d, according to the communication device control program 23a, a QR code reader program 23b, and an education program 23c stored in the memory 23, in response to a touch (or key) input signal from the touch input unit 25, or a signal received by the wireless communication unit 27 or the near field communication unit 28. The individual programs 23a, 23b, and 23c may be stored in the memory 23 in advance, or may be programs read from an external storage medium M such as a memory card through the storage medium reading unit 24 and stored in the memory 23.

The QR code reader program 23b is a general-purpose application program for acquiring an image of a two-dimensional code Q (a QR code in the present embodiment) and acquiring data (QR data) on the image of the two-dimensional code Q.

The education program 23c is a dedicated application program for transmitting QR data acquired from the scientific calculator 10F to the compute server 30, in cooperation with the QR code reader program 23b, and receiving calculation reference information such as a graph, a table, or a calculation result generated on the basis of the QR data in the compute server 30, and displaying the calculation reference information.

In the communication device 20 configured as described above, the CPU 22 controls the operations of the individual units of the circuit according to commands described in the communication device control program 23a, the QR code reader program 23b, and the education program 23c, whereby software and hardware operate in cooperation, thereby implementing a QR acquiring/transmitting function of acquiring data (QR data) on two-dimensional codes (QR codes in the present embodiment) displayed on the scientific calculator 10F or output by near field communication and transmitting the acquired QR data to the compute server 30 as will be described in the following operation description.

Now, the operation of the information display device (10D or 10F) having the above-described configuration will be described.

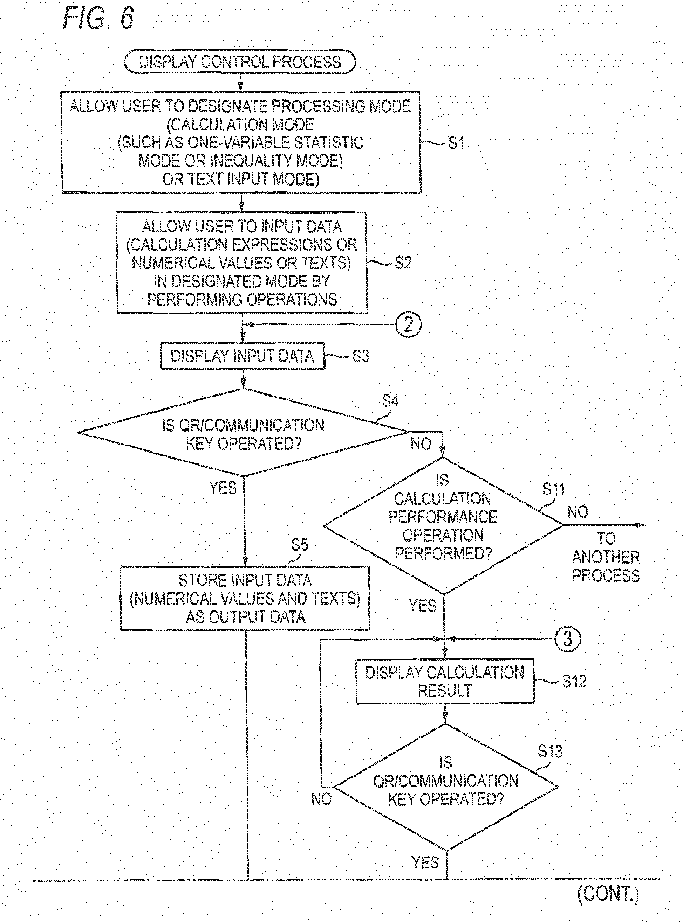

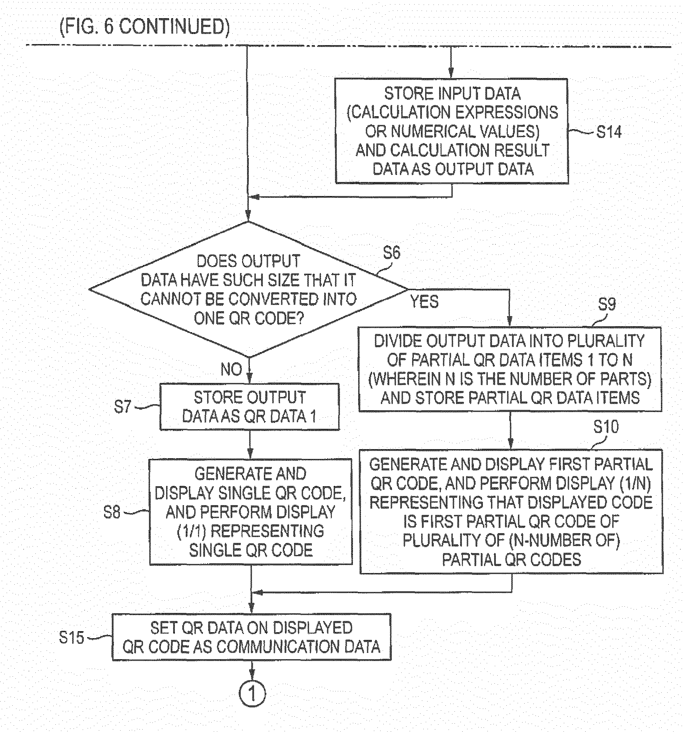

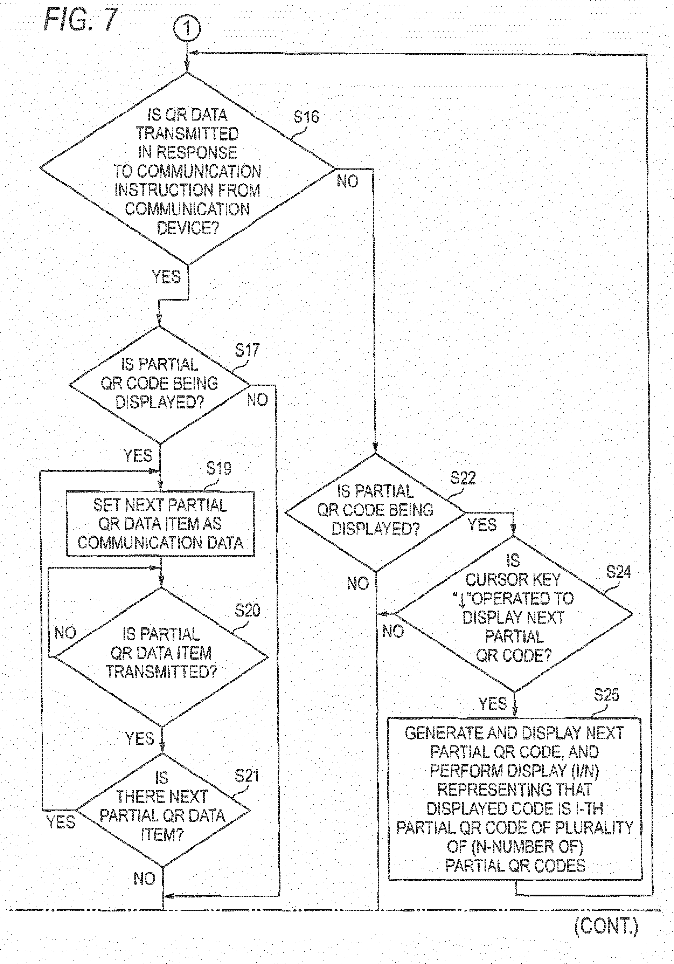

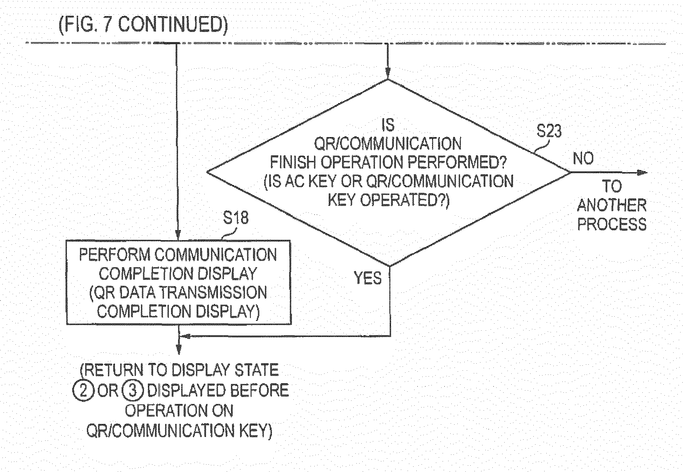

FIGS. 6 and 7 are flow charts illustrating two parts constituting a display control process of the information display device (10D or 10F), respectively.

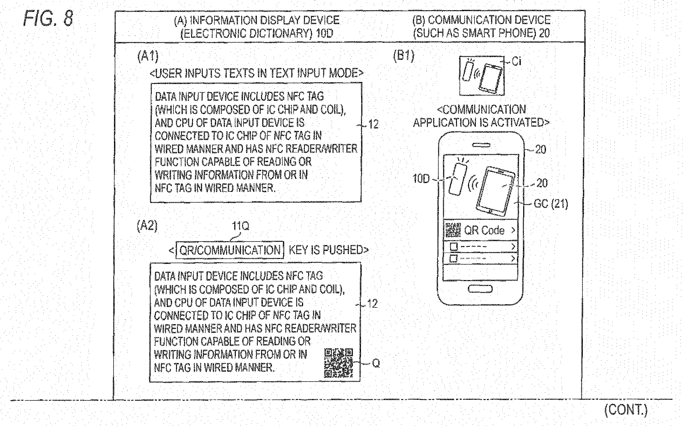

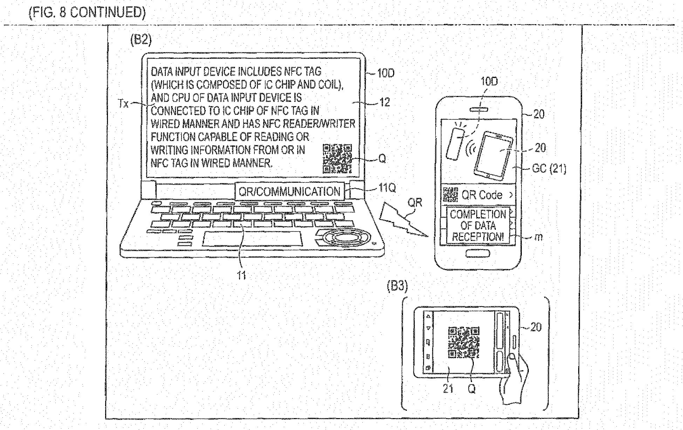

FIG. 8 is a view illustrating operation states of the electronic dictionary device 10D and operation states of the communication device 20 according to the display control process of the information display device (the electronic dictionary device 10D).

In the electronic dictionary device 10D (see FIG. 1), if a text input mode is set as an operating mode in response to a user's operation on the key input unit 11 (STEP S1), a text Tx input by user's operations is displayed on the display output unit 12 as shown by (A1) of FIG. 8 (STEPS S2 and S3).

In the electronic dictionary device 10D, if the "QR/communication" key 11Q is operated to use the input text Tx in the communication device 20 ("Yes" in STEP S4), data including the input text Tx is stored as output data in the output data area 14d (STEP S5).

Then, it is determined whether the output data stored in the output data area 14d has such a size that it cannot be converted into one two-dimensional code (a QR code) Q (STEP S6).

In a case of determining that the output data stored in the output data area 14d has such a size that it can be converted into one two-dimensional code Q ("No" in STEP S6), the output data (the text Tx) is converted into one two-dimensional code (QR code) Q, and data (QR data) on the two-dimensional code Q is stored as QR data 1 in the QR data area 14e (STEP S7).

Then, the two-dimensional code (the QR code) Q corresponding to the QR data stored in the QR data area 14e is generated, and is displayed on the display output unit 12 as shown by (A2) in FIG. 8. At this time, a number "1/1" representing that the corresponding code is a single two-dimensional code (QR code) Q is additionally displayed (STEP S8).

If the two-dimensional code (the QR code) Q including the data on the input text Tx is displayed on the display output unit 12, the data (QR data) on the displayed two-dimensional code Q is read from the QR data area 14e, and is set as communication data (a data buffer) of the wireless communication unit 16 (STEP S15).

For example, in a case where the wireless communication unit 16 uses near field communication such as NFC, the QR data is written in the IC chip IT of the NFC tag by the CPU 13, and is set such that it can be read from the communication device 20 having the wireless reader/writer function (see FIG. 3B).

In this case, in the communication device 20, as shown by (B1) in FIG. 8, if a communication application icon Ci is touched, whereby the communication device control program 23a is activated, a communication screen GC representing a communication message between the communication device 20 and the information display device (10D) is displayed on the display output unit 21.

Then, if the communication device 20 is brought close to the electronic dictionary device 10D as shown by (B2) of FIG. 8, a communication connection with the electronic dictionary device 10D is established, and the QR data set as the communication data (the data buffer) of the electronic dictionary device 10D is transmitted to and read by the communication device 20 ("Yes" in STEP S16).

If the communication device 20 receives all of the QR data from the electronic dictionary device 10D, information representing completion of reception is transmitted from the communication device 20. Then, in the electronic dictionary device (the information display device), in response to reception of the information representing completion of reception, a reception completion message m is displayed, and a reception completion sound (dingdong) is also output.

In the electronic dictionary device 10D, if the QR data is transmitted to and read by the communication device 20 ("Yes" in STEP S16), it is determined whether the two-dimensional code (the QR code) Q displayed on the display output unit 12 is a partial two-dimensional code Q (1/N) (STEP S17).

In a case of determining that the two-dimensional code (the QR code) Q displayed on the display output unit 12 is a code displayed as a single two-dimensional code Q (1/1), not as a partial two-dimensional code Q (1/N) ("No" in STEP S17), a communication completion message "COMPLETION OF QR DATA TRANSMISSION" (not shown in the drawings) is displayed on the display output unit 12 (STEP S18).

Then, the two-dimensional code (the QR code) Q displayed on the display output unit 12 is deleted, whereby the display output unit returns to the display state in which it displays only the input text Tx as shown by (A1) in FIG. 8 (STEP S3).

Meanwhile, in a state where the two-dimensional code (the QR code) Q corresponding to the output data is displayed on the display output unit 21 of the electronic dictionary device 10D as shown by (A2) in FIG. 8 (STEP S15), the communication device 20 activates the QR code reader program 23b and acquires an image of the displayed two-dimensional code Q as shown by (B3) in FIG. 8, whereby the communication device 20 acquires the data (the QR data) on the two-dimensional code (the QR code) Q.

Thereafter, in the electronic dictionary device 10D, if the "QR/communication" key 11Q is operated again, or the "AC" key is operated ("Yes" in STEP S23), the two-dimensional code (the QR code) Q displayed on the display output unit 12 is deleted, whereby the display output unit returns to the display state where it displays only the input text Tx as shown by (A) in FIG. 8 (STEP S3).

As described above, in a state where the two-dimensional code obtained by converting the output data including the text Tx is displayed on the electronic dictionary device 10D, if the communication device 20 is brought close to the electronic dictionary device 10D such that a communication connection is established by near field communication, the communication device 20 can easily and accurately acquire the data (the QR data) on the two-dimensional code, without acquiring an image of the two-dimensional code.

Further, the user can easily see that the data (the QR data) including the text Tx has been successfully transmitted from the electronic dictionary device 10D to the communication device 20, by confirming the communication completion message displayed on the display output unit 12 or deletion of the two-dimensional code (the QR code) Q from the display output unit 12.

### (STATISTIC CALCULATION PROCESS)

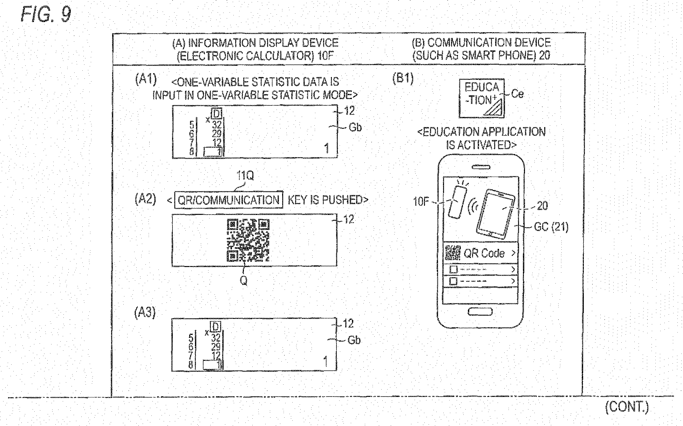

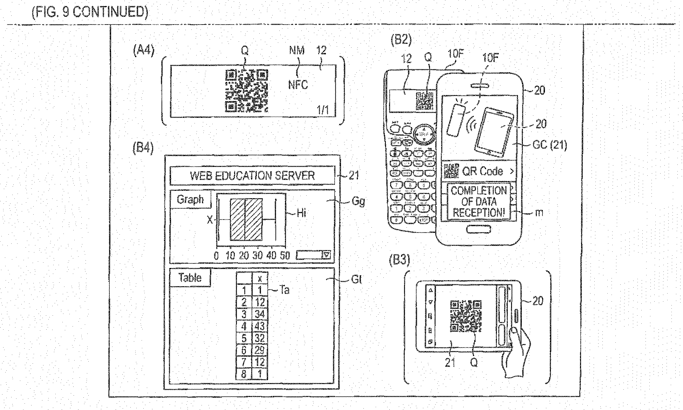

FIG. 9 is a view illustrating operation states of the scientific calculator 10F in the one-variable statistic calculation mode and operation states of the communication device 20 according to the display control process of the information display device (the scientific calculator 10F).

In the scientific calculator 10F (see (A) of FIG. 2), if the one-variable statistic calculation mode is designated as a calculation mode in response to a user's operation on the key input unit 11 (STEP S1), as shown by (A1) in FIG. 9, a one-variable statistic input screen Gb for inputting numerical values of a variable "X" as one-variable statistic data is displayed on the display output unit 12, and numerical values of the variable "X" input by user's operations are sequentially displayed (STEPS S2 and S3).

If the "QR/communication" key 11Q is operated in order to acquire calculation reference information on the one-variable statistic data input to the scientific calculator 10F, from the compute server 30 ("Yes" in STEP S4), the unique ID of the scientific calculator 10F, the calculation type (one-variable statistic calculation), a variety of setting data, and the communication address of the compute server 30 are included in the input one-variable statistic data, which is stored as output data in the output data area 14d (STEP S5).

Then, similarly to the case of the electronic dictionary device 10D described above with reference to FIG. 8, after it is determined that the output data stored in the output data area 14d has such a size that it can be converted into one two-dimensional code Q ("No" in STEP S6), the output data (including the one-variable statistic data, the unique ID, the calculation type, the variety of setting data, and the communication address of the compute server 30) is converted into one two-dimensional code (one QR code) Q, which is displayed on the display output unit 12 as shown by (A2) in FIG. 9 (STEPS S7 and S8).

Then, similarly to the case of the electronic dictionary device 10D, data on the displayed two-dimensional code Q (QR data (including the one-variable statistic data, the unique ID, the calculation type, the variety of setting data, and the communication address of the compute server 30)) is read from the QR data area 14e, and is set as communication data (the data buffer) of the wireless communication unit 16 (STEP S15).

In this case, in the communication device 20, if an education icon Ce is touched, whereby the education program 23c is activated, the communication screen GC as described above is displayed on the display output unit 21 as shown by (B1) in FIG. 9.

Then, if the communication device 20 is brought close to the scientific calculator 10F as shown by (B2) of FIG. 9, a communication connection with the scientific calculator 10F is established, and the QR data set as the communication data (the data buffer) of the scientific calculator 10F is transmitted to and read by the communication device 20 ("Yes" in STEP S16).

If the communication device 20 receives all of the QR data from the scientific calculator 10F, as described above, information representing completion of reception is transmitted from the communication device 20. Then, in the scientific calculator 10F (the information display device), in response to reception of the information representing completion of reception, a reception completion message m is displayed on the display output unit 21, and a reception completion sound (dingdong) is also output.

In the scientific calculator 10F, if the QR data is transmitted to and read by the communication device 20 ("Yes" in STEP S16), and it is determined that the two-dimensional code (the QR code) Q displayed on the display output unit 12 is a code displayed as a single two-dimensional code Q (1/1), not as a partial two-dimensional code Q (1/N) ("No" in STEP S17), as described above, a communication completion message "COMPLETION OF QR DATA TRANSMISSION" (not shown in the drawings) is displayed on the display output unit 12 (STEP S18).

Then, the two-dimensional code (the QR code) Q displayed on the display output unit 12 is deleted, whereby the display output unit returns to the state in which it displays the one-variable statistic input screen Gb including the input one-variable statistic data as shown by (A3) in FIG. 9 (STEP S3).

Meanwhile, in the state where the two-dimensional code (the QR code) Q including the input one-variable statistic data is displayed on the display output unit 21 of the scientific calculator 10F as shown by (A2) in FIG. 9 (STEP S15), the communication device 20 acquires an image of the displayed two-dimensional code Q as shown by (B3) in FIG. 9, whereby the communication device 20 acquires the data (the QR data) on the two-dimensional code (the QR code) Q.

Thereafter, in the scientific calculator 10F, if the "QR/communication" key 11Q is operated again, or the "AC" key is operated, the two-dimensional code (the QR code) Q displayed on the display output unit 12 is deleted, whereby the display output unit returns to the state where it displays the one-variable statistic input screen Gb including the input one-variable statistic data as shown by (A3) in FIG. 9 (STEP S3).

Also, if the two-dimensional code (the QR code) Q including the input one-variable statistic data is displayed on the display output unit 12 of the scientific calculator 10F as shown by (A4) in FIG. 9, and the data (the QR data) on the two-dimensional code Q is set as the communication data (the data buffer) of the wireless communication unit 16 (STEP S15), a near field communication mark "NFC" NM representing that it is possible to transmit the data (the QR data) on the two-dimensional code Q to the communication device 20 may be displayed.

If the communication device 20 acquires the data on the two-dimensional code (the QR data (including the one-variable statistic data, the unique ID, the calculation type, the variety of setting data, and the communication address of the compute server 30)), the QR data is transmitted to the compute server 30 provided on the communication network N, according to the education program 23c.

The compute server 30 generates a graph screen Gg of a box plot Hi on the basis of the one-variable statistic data, the calculation type (statistic calculation), and the variety of setting data included in the QR data received from the communication device 20, as shown by (B4) in FIG. 9, according to a graph type "BOX PLOT" designated as a default.

Specifically, in a case where calculation is performed on the one-variable statistic data (x = 1, 12, 34, ..., 29, 12, and 1), whereby calculation results (min(x) [MINIMUM VALUE] = 1, Q1 [25 PERCENTILE] = 6.5, Med [MEDIAN VALUE] = 20.5, Q3 [75 PERCENTILE] = 33, and Max(x) [MAXIMUM VALUE] = 43) are acquired, the box plot Hi is drawn on the basis of the calculation results.

Also, the compute server 30 generates a table screen Gt of a table Ta of the one-variable statistic data (x = 1, 12, 34, ..., 29, 12, and 1).

The graph screen Gg and the table screen Gt generated by the compute server 30 are transmitted to the communication device 20 which is the transmission source of the QR data.

As a result, on the display output unit 21 of the communication device 20, the graph screen Gg and the table screen Gt based on the one-variable statistic data input by the scientific calculator 10F are displayed as statistic calculation reference information, as shown by (B4) in FIG. 9. Therefore, it is possible to learn one-variable statistics.

### (MATRIX CALCULATION PROCESS)

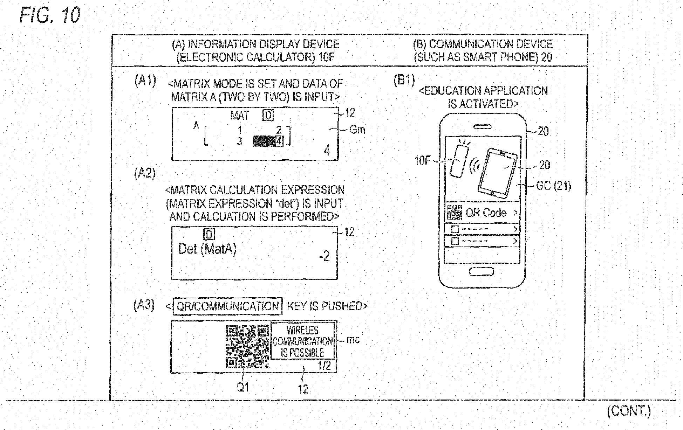

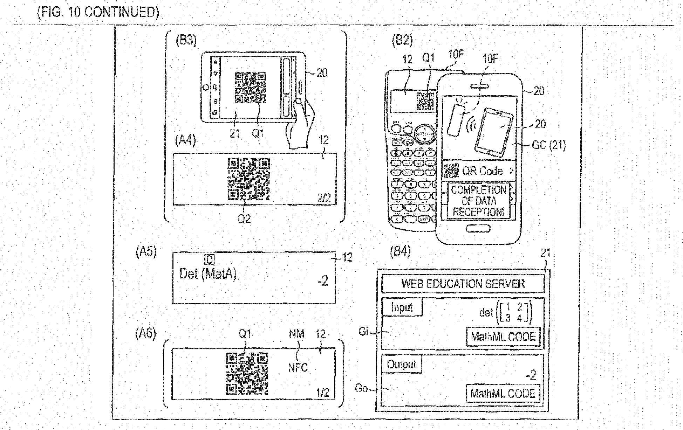

FIG. 10 is a view illustrating operation states of the scientific calculator 10F in the matrix calculation mode and operation states of the communication device 20 according to the display control process of the information display device (the scientific calculator 10F).

In the scientific calculator 10F (see (A) of FIG. 2), if the matrix calculation mode is designated as a calculation mode in response to a user's operation on the key input unit 11, a matrix data input screen Gm corresponding to a desired matrix name "MatA" and a desired matrix size (here, 2 by 2) is displayed as shown by (A1) in FIG. 10.

After "1", "2", "3", and "4" are input as matrix data of the matrix name "MatA" and displayed on the matrix data input screen Gm (STEPS S2 and S3), if a matrix calculation expression (here, "det(MatA)") is input as shown by (A2) in FIG. 10, and the "=" key is operated to issue a calculation performance instruction ("Yes" in STEP S11), calculation according to the matrix calculation expression "det(MatA)" (wherein MatA is composed of I, 2, 3, and 4), and the calculation expression and a calculation result "-2" are displayed on the display output unit 12 (STEP S12).

Then, if the "QR/communication" key 11Q is operated in order to acquire calculation reference information on the calculation expression "det(MatA)" and the calculation result "-2" from the compute server 30 (STEP S13), the unique ID of the scientific calculator 10F, the calculation type (matrix calculation), the variety of setting data, and the communication address of the compute server 30 are included in the calculation result data "-2", which is stored as output data in the output data area 14d (STEP S14).

In this case, if it is determined that the output data stored in the output data area 14d has such a size that it cannot be converted into one two-dimensional code Q ("Yes" in STEP S6), the output data is converted into a plurality of (here, two) partial two-dimensional codes (partial QR codes) Q1 and Q2, and data items (QR data items) on the partial two-dimensional codes Q1 and Q2 are stored as partial QR data items 1 and 2 in the QR data area 14e (STEP S9).

Then, the partial two-dimensional code (partial QR code) Q1 corresponding to the first partial QR data item 1 stored in the QR data area 14e is generated, and is displayed on the display output unit 12, as shown by (A3) in FIG. 10. At this time, a number "1/2" representing that the corresponding code is the first partial two-dimensional code (partial QR code) Q1 is additionally displayed (STEP S10).

Then, the data (the partial QR data item 1) on the displayed partial two-dimensional code Q1 is read from the QR data area 14e, and is set as communication data (the data buffer) of the wireless communication unit 16 (STEP S15).

In this case, on the display output unit 12 of the scientific calculator 10F, a message mc representing that communication (wireless communication) is possible and thus it is possible to transmit the data (the partial QR data item 1) on the partial two-dimensional code Q1 to the communication device 20 may be displayed.

In this case, in the communication device 20, if the education program 23c is activated, the communication screen GC as described above is displayed on the display output unit 21 as shown by (B1) of FIG. 10.

Then, if the communication device 20 is brought close to the scientific calculator 10F as shown by (B2) of FIG. 10, a communication connection with the scientific calculator 10F is established, and the partial QR data item 1 set as the communication data (the data buffer) of the scientific calculator 10F is transmitted to and read by the communication device 20 ("Yes" in STEP S16).

If the partial QR data item 1 is transmitted to and read by the communication device 20 ("Yes" in STEP S16), in the scientific calculator 10F, it is determined that the partial two-dimensional code (partial QR code) Q1 is being displayed on the display output unit 12 ("Yes" in STEP S17), and the data (the partial QR data item 2) on the second partial two-dimensional code Q2 is read from the QR data area 14e, and is set as communication data (the data buffer) of the wireless communication unit 16 (STEP S19).

Then, as the next item of the partial QR data item 1, the partial QR data item 2 set as the communication data (the data buffer) of the scientific calculator 10F is transmitted to and read by the communication device 20 ("Yes" in STEP S20).

Then, if it is determined that there is a next partial QR data item (here, a partial QR data item 3) in the QR data area 14e ("Yes" in STEP S21), as described above, the partial QR data item 3 is read from the QR data area 14e, and is set as communication data (the data buffer) of the wireless communication unit 16 (STEP S19).

Meanwhile, if it is determined that all of the partial QR data items 1 to N stored in the QR data area 14e have been transmitted (STEP S20 and "No" in STEP S21), as described above, information representing completion of reception is transmitted from the communication device 20. Then, in the scientific calculator 10F (the information display device), in response to reception of the information representing completion of reception, a communication completion message "COMPLETION OF QR DATA TRANSMISSION" (not shown in the drawings) is displayed on the display output unit 12 (STEP S18).

Then, the partial two-dimensional code (the partial QR code) Q1 displayed on the display output unit 12 is deleted, whereby the display output unit returns to the state where it displays the matrix calculation expression "det(MatA)" and the calculation result "-2" as shown by (A5) of FIG. 10.

In the communication device 20, if reception of all of the partial QR data items I to N from the scientific calculator 10F is completed, as described above, the reception completion message m is displayed on the display output unit 21, and the reception completion sound (dingdong) is also output.

Meanwhile, in the state where the partial two-dimensional code (partial QR code) Q1 corresponding to the first partial QR data item 1 stored in the QR data area 14e is displayed on the display output unit 21 of the scientific calculator 10F as shown by (A3) in FIG. 10 (STEP S15), the communication device 20 acquires an image of the displayed partial two-dimensional code Q1 as shown by (B3) in FIG. 10, whereby the communication device 20 acquires the data (the partial QR data item 1) on the partial two-dimensional code (partial QR code) Q1.

Further, in the state where the partial two-dimensional code (partial QR code) Q1 is displayed ("Yes" in STEP S22), if a cursor key "↓" 114 is operated in order to display the next (here, the second) partial two-dimensional code (partial QR code) Q2 ("Yes" in STEP S24), as shown by (A4) in FIG. 10, the partial two-dimensional code (partial QR code) Q2 corresponding to the second partial QR data item 2 stored in the QR data area 14e is generated and is displayed on the display output unit 12. At this time, as described above, a number "2/2" representing the corresponding code is the second partial two-dimensional code (partial QR code) Q2 is additionally displayed (STEP S25).

In this case, the communication device 20 acquires an image of the second partial two-dimensional code Q2 displayed on the scientific calculator 10F, whereby the communication device 20 acquires the data (the partial QR data item 2) on the partial two-dimensional code (partial QR code) Q2 (all of the partial QR data items 1 to N). Thereafter, in the scientific calculator 10F, if the "QR/communication" key 11Q is operated again, or the "AC" key is operated ("Yes" in STEP S23), the partial two-dimensional code (QR code) Q2 displayed on the display output unit 12 is deleted, whereby the scientific calculator returns to the state where it displays the matrix calculation expression "det(MatA)" and the calculation result "-2" (STEP S12).

Also, even in the case of this matrix calculation process, if the partial two-dimensional code (QR code) Q1 is displayed on the display output unit 12 of the scientific calculator 10F, as shown by (A6) in FIG. 10, and the data (the partial QR data item 1) on the partial two-dimensional code Q1 is set as communication data (the data buffer) of the wireless communication unit 16 (STEP S15), the near field communication mark "NFC" NM representing that it is possible to sequentially transmit the data items (the partial QR data items 1 to N) on the partial two-dimensional codes Q1 to QN to the communication device 20 may be displayed.

If the communication device 20 acquires the data on the two-dimensional codes (including the matrix calculation expression "det(MatA)", the matrix data "1", "2", "3", and "4" of the matrix "MatA", the calculation result data "-2", the unique ID, the calculation type (matrix calculation), the variety of setting data,, and the communication address of the compute server 30), the QR data is transmitted to the compute server 30 provided on the communication network N, according to the education program 23c.

On the basis of the matrix calculation expression "det(MatA)", the matrix data "1", "2", "3", and "4" of the matrix "MatA", the calculation result data "-2", the calculation type (matrix calculation), and the variety of setting data included in the QR data received from the communication device 20, the compute server 30 replaces the matrix part "MatA" of the matrix calculation expression with the matrix data "1", "2", "3", and "4", and generates an input screen Gi including the calculation expression "det([1, 2, 3, 4])" as shown by (B4) in FIG. 10.

Also, the compute server 30 generates an output screen Go including the calculation result data "-2".

The input screen Gi and the output screen Go generated by the compute server 30 are transmitted as the matrix calculation reference information to the communication device 20 which is the transmission source of the QR data.

As a result, on the display output unit 21 of the communication device 20, the input screen Gi and the output screen Go according to the matrix calculation performed by the scientific calculator 10F are displayed as the matrix calculation reference information, as shown by (B4) in FIG. 10. Therefore, it is possible to learn the contents of the matrix calculation.

Therefore, according to the information display device (10D or 10F) having the above-described configuration, output data including input data input by user's operations on the key input unit 11 is converted into a two-dimensional code (QR code) Q in response to an operation on the "QR/communication" key 11Q, and the two-dimensional code is displayed on the display output unit 12. Also, data (QR data) on the two-dimensional code (QR code) Q is set as communication data of the wireless communication unit 16 such that it can be transmitted by a communication connection with the external communication device 20 based on near field communication. Then, if the communication device 20 acquires the two-dimensional code Q displayed on the display output unit 12 by acquiring an image of the two-dimensional code, and the "QR/communication" key 11 Q (or the "AC" key) is operated, or if the communication device 20 is brought close to the information display device and acquires the QR data from the wireless communication unit 16, the display of the two-dimensional code Q is deleted.

As described above, in the case where the two-dimensional code Q is displayed on the information display device (10D or 10F), if the communication device 20 is brought close to the information display device (10D or 10F) such that a communication connection is established by near field communication, the communication device 20 can easily and accurately acquire the data (QR data) on the two-dimensional code including the data input by the user, without acquiring an image of the two-dimensional code.

Therefore, the user can easily see that the QR data has been successfully transmitted from the electronic dictionary device (10D or 10F) to the communication device 20, by confirming deletion of the two-dimensional code (the QR code) Q displayed on the display output unit 12.

Also, according to the information display device (10D or 10F) having the above-described configuration, if the communication device 20 acquires the QR data from the wireless communication unit 16, the communication completion message "COMPLETION OF QR DATA TRANSMISSION" is displayed on the display output unit 12. Therefore, the user can more clearly confirm that the QR data has been successfully transmitted to the communication device 20.

Also, according to the information display device (10D or 10F) having the above-described configuration, in a case where the output data including the input data input by user's operations cannot be converted into one two-dimensional code, the output data is converted into a plurality of partial two-dimensional codes (partial QR codes) Q1 to QN. In this case, while the data items (the partial QR data items 1 to N) on the plurality of partial two-dimensional codes (partial QR codes) Q1 to QN are sequentially transmitted from the wireless communication unit 16 to the communication device 20 close to the information display device, whenever each data item is transmitted, the next partial QR data item n is consecutively set as communication data of the wireless communication unit 16. If all of the plurality of partial QR data items 1 to N are transmitted from the wireless communication unit 16 to the communication device 20, the display of the two-dimensional code Q1 is deleted.

As described above, even in the case where the output data including the input data input by user's operations are converted into the plurality of partial two-dimensional codes (partial QR codes) Q1 to QN, if the communication device 20 is brought close to the information display device (10D or 10F) such that a communication connection is established by near field communication, the communication device can consecutively acquire the data items on the partial two-dimensional codes Q1 to QN, without user's repetitive work.

However, the data items (the partial QR data items 1 to N) on the plurality of partial two-dimensional codes (partial QR codes) Q1 to QN may be collectively set as communication data of the wireless communication unit 16, thereby capable of being collectively transmitted to the communication device 20 without user's repetitive work.

All of the methods of the individual processes which are performed by the information display device (10D or 10F) described in each embodiment, that is, the methods of the processes such as the display control process shown by the flow chart of FIG. 7 can be configured as programs, which can be stored in recording media, such as memory cards (such as ROM cards and RAM cards), magnetic disks (such as floppy (registered as a trade mark) disks and hard disks), optical disks (such as CD-ROMs and DVDs), and semiconductor memories, to distributed. Also, program data for realizing the methods may be transmitted in a program code form on the communication network N, and the program data can be loaded into a computer which is an electronic apparatus is connected to the communication network N by a communication unit, thereby capable of realizing the display control function described above.

The present invention is not limited to the embodiments, and may have various modifications within the scope without departing from the spirit thereof at the time of carrying out the invention. In addition, the embodiments include inventions of various stages, and thus various inventions may be extracted by appropriate combinations of a plurality of disclosed constituent elements. For example, even if some constituent elements are deleted from all the constituent elements shown in the embodiments, or some constituent elements are combined in different forms, a configuration in which the constituent elements are deleted or combined may be extracted as an invention in a case of being capable of solving the problems described in the Problem that the Invention is to Solve and achieving the effects described in the Advantage of the Invention.

## Claims

1. An information display device to perform wireless communication with a communication device comprising:
a display; and
a processor,
wherein the processor is configured to:
input data in response to a user's operation;
display output data corresponding to the input data, as output display data, on the display;
in a state where the output display data is displayed, transmit the output data to the communication device; and
after the output data has been transmitted to the communication device, delete the output display data from the display.

2. The information display device according to claim 1, wherein:
after the displayed output display data is imaged by another device, in response to a user's operation, the deleting process of the output display data deletes the displayed output display data.

3. The information display device according to claim 2, wherein:
the displaying process of the output data as the output display data converts the output data into a two-dimensional code, and displays the two-dimensional code as the output display data,
after the displayed two-dimensional code is imaged by another device, in response to a user's operation, the deleting process of the output display data deletes the displayed two-dimensional code,
in the state where the two-dimensional code is displayed, the transmitting process of the output data transmits data on a content of the two-dimensional code to the communication device, and
after the data on the content of the two-dimensional code has been transmitted to the communication device, the deleting process of the output display data deletes the displayed two-dimensional code.

4. The information display device according to claim 3, wherein:
the display process of the output data as the output display data converts the output data into a plurality of partial two-dimensional codes, and sequentially displays the partial two-dimensional codes,
whenever each partial two-dimensional code which is sequentially displayed is imaged by another device, in response to a user's operation, the deleting process of the output display data deletes the displayed partial two-dimensional code,
in a state where one partial two-dimensional code of the plurality of partial two-dimensional codes is displayed, the transmitting process of the output data sequentially transmits data on contents of the plurality of partial two-dimensional codes to the communication device, and
after the data on the contents of the plurality of partial two-dimensional codes has been sequentially transmitted to the communication device, the deleting process of the output display data deletes the displayed partial two-dimensional code.

5. The information display device according to claim 3, wherein:
the display process of the output data as the output display data converts the output data including the input data into a plurality of partial two-dimensional codes, and sequentially displays the partial two-dimensional codes,
whenever each partial two-dimensional code which is sequentially displayed is imaged by another device, in response to a user's operation, the deleting process of the output display data deletes the displayed partial two-dimensional code,
in a state where one partial two-dimensional code of the plurality of partial two-dimensional codes is displayed, the transmitting process of the output data collectively transmits data on contents of the plurality of partial two-dimensional codes to the communication device, and
after the data on the contents of the plurality of partial two-dimensional codes has been collectively transmitted to the communication device, the deleting process of the output display data deletes the displayed partial two-dimensional code.

6. The information display device according to claim 1, wherein:
the processor is configured to display communication completion information after receiving a notification indicating that the output data has been completely transmitted to the communication device.

7. The information display device according to claim 1, wherein:
after the output data is transmitted to the communication device, when receiving information indicating the output data is completely received, the deleting process of the output display data deletes the displayed output data.

8. The information display device according to claim 1, wherein:
the information display device performs near field communication with a communication device.

9. An information display method for controlling an information display device which includes a display and which is configured to perform wireless communication with a communication device, the method comprising:
inputting data in response to a user's operation;
displaying output data corresponding to the input data, as output display data, on the display;
in a state where the output display data is displayed, transmitting the output data to the communication device; and
after the output data has been transmitted to the communication device, deleting the output display data from the display.

10. The information display method according to claim 9, further comprising:
after the displayed output display data is imaged by another device, in response to a user's operation, deleting the displayed output display data.

11. The information display method according to claim 10, further comprising:
converting the output data into a two-dimensional code, and displaying the two-dimensional code as the output display data,
after the displayed two-dimensional code is imaged by another device, in response to a user's operation, deleting the displayed two-dimensional code,
in the state where the two-dimensional code is displayed, transmitting data on a content of the two-dimensional code to the communication device, and
after the data on the content of the two-dimensional code has been transmitted to the communication device, deleting the displayed two-dimensional code.

12. The information display method according to claim 11, further comprising:
converting the output data into a plurality of partial two-dimensional codes, and sequentially displaying the partial two-dimensional codes,
whenever each partial two-dimensional code which is sequentially displayed is imaged by another device, in response to a user's operation, deleting the displayed partial two-dimensional code,
in a state where one partial two-dimensional code of the plurality of partial two-dimensional codes is displayed, sequentially transmitting data on contents of the plurality of partial two-dimensional codes to the communication device, and
after the data on the contents of the plurality of partial two-dimensional codes has been sequentially transmitted to the communication device, deleting the displayed partial two-dimensional code.

13. The information display method according to claim 11, further comprising:
converting the output data including the input data into a plurality of partial two-dimensional codes, and sequentially displays the partial two-dimensional codes,
whenever each partial two-dimensional code which is sequentially displayed is imaged by another device, in response to a user's operation, deleting the displayed partial two-dimensional code,
in a state where one partial two-dimensional code of the plurality of partial two-dimensional codes is displayed, collectively transmitting data on contents of the plurality of partial two-dimensional codes to the communication device, and
after the data on the contents of the plurality of partial two-dimensional codes has been collectively transmitted to the communication device, deleting the displayed partial two-dimensional code.

14. The information display method according to claim 9, further comprising:
displaying communication completion information after receiving a notification indicating that the output data has been completely transmitted to the communication device.

15. The information display method according to claim 9, further comprising:
after the output data is transmitted to the communication device, when receiving information indicating the output data is completely received, deleting the displayed output data.

16. A non-transitory computer readable storage medium stored a program for controlling a computer of an electronic device which includes a display and which is configured to perform wireless communication with a communication device, to cause the computer to perform operations comprising:
inputting data in response to a user's operation;
displaying output data corresponding to the input data, as output display data, on the display;
in a state where the output display data is displayed, transmitting the output data to the communication device; and
after the output data has been transmitted to the communication device, deleting the output display data from the display.

17. The storage medium according to claim 16, wherein the operations further comprises:
after the displayed output display data is imaged by another device, in response to a user's operation, deleting the displayed output display data.

18. T The storage medium according to claim 17, wherein the operations further comprises:
converting the output data into a two-dimensional code, and displaying the two-dimensional code as the output display data,
after the displayed two-dimensional code is imaged by another device, in response to a user's operation, deleting the displayed two-dimensional code,
in the state where the two-dimensional code is displayed, transmitting data on a content of the two-dimensional code to the communication device, and
after the data on the content of the two-dimensional code has been transmitted to the communication device, deleting the displayed two-dimensional code.

19. The storage medium according to claim 18, wherein the operations further comprises:
converting the output data into a plurality of partial two-dimensional codes, and sequentially displaying the partial two-dimensional codes,
whenever each partial two-dimensional code which is sequentially displayed is imaged by another device, in response to a user's operation, deleting the displayed partial two-dimensional code,
in a state where one partial two-dimensional code of the plurality of partial two-dimensional codes is displayed, sequentially transmitting data on contents of the plurality of partial two-dimensional codes to the communication device, and
after the data on the contents of the plurality of partial two-dimensional codes has been sequentially transmitted to the communication device, deleting the displayed partial two-dimensional code.

20. The storage medium according to claim 18, wherein the operations further comprises:
converting the output data including the input data into a plurality of partial two-dimensional codes, and sequentially displays the partial two-dimensional codes,
whenever each partial two-dimensional code which is sequentially displayed is imaged by another device, in response to a user's operation, deleting the displayed partial two-dimensional code,
in a state where one partial two-dimensional code of the plurality of partial two-dimensional codes is displayed, collectively transmitting data on contents of the plurality of partial two-dimensional codes to the communication device, and
after the data on the contents of the plurality of partial two-dimensional codes has been collectively transmitted to the communication device, deleting the displayed partial two-dimensional code.
